(19) Europäisches Patentamt
European Patent Office
Office européen des brevets

(11) **EP 4 521 662 A1**

(12) **EUROPEAN PATENT APPLICATION**
published in accordance with Art. 153(4) EPC

(43) Date of publication:
**12.03.2025 Bulletin 2025/11**

(21) Application number: **23810709.8**

(22) Date of filing: **20.04.2023**

(51) International Patent Classification (IPC):
*H04L 1/00* (2006.01)

(52) Cooperative Patent Classification (CPC):
**G06N 3/0464; G06N 3/084; H04L 1/00**

(86) International application number:
**PCT/CN2023/089480**

(87) International publication number:
**WO 2023/226635 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.05.2022  CN 202210578899**

(71) Applicant: **Huawei Technologies Co., Ltd.**
**Shenzhen, Guangdong 518129 (CN)**

(72) Inventors:
• **DAI, Shengchen**
  **Shenzhen, Guangdong 518129 (CN)**
• **TENG, Wei**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**
• **WANG, Jun**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **CHANNEL ENCODING/DECODING METHOD AND APPARATUS**

(57)     A channel encoding/decoding method and an apparatus are provided. The method includes: obtaining a plurality of pieces of first information based on a to-be-sent bit sequence, where each piece of first information includes a multi-dimensional time step feature, the multi-dimensional time step feature is determined based on a plurality of bits in the bit sequence, a plurality of bits corresponding to a multi-dimensional time step feature included in an $i^{th}$ piece of first information and a plurality of bits corresponding to a multi-dimensional time step feature included in an $(i+1)^{th}$ piece of first information are partially the same, and i is a positive integer; encoding the plurality of pieces of first information into second information; and sending the second information. According to the foregoing method, an encoding burden can be reduced, and problems such as gradient explosion and gradient vanishing are not easily caused. In addition, encoding performance of a medium-length sequence can be improved, and a training difficulty of an encoding model can be reduced.

FIG. 9

## Description

## CROSS-REFERENCE TO RELATED APPLICATIONS

This application claims priority to Chinese Patent Application No. 202210578899.X, filed with the China National Intellectual Property Administration on May 25, 2022 and entitled "CHANNEL ENCODING/DECODING METHOD AND APPARATUS", which is incorporated herein by reference in its entirety.

## TECHNICAL FIELD

Embodiments of this application relate to the communication field, and in particular, to a channel encoding/decoding method and an apparatus.

## BACKGROUND

Currently, a neural network may be used for channel encoding/decoding. For example, the channel encoding/decoding is designed by using a convolutional neural network (convolutional neural network, CNN) or a recurrent neural network (recurrent neural network, RNN). A specific practice is as follows: An existing structure (for example, the CNN or the RNN) in the neural network is separately used as an encoder (encoder) network and a decoder (decoder) network, to implement channel encoding and decoding functions.

The RNN is used as an example. A neural network autoencoder structure that uses the RNN for encoding/decoding includes an encoder and a decoder. The encoder uses a to-be-sent bit sequence as input of a time step of the RNN, to obtain encoded bits. The decoder also uses the RNN structure, and restores the bit sequence after inputting received information into the RNN.

The CNN or the RNN can learn only a local structure of encoding/decoding, and a performance gain is limited. A modern recurrent neural network such as a long short-term memory network (long short-term memory network, LSTM) or a gated recurrent unit (gated recurrent unit, GRU) may capture a long short-term dependency in the bit sequence. However, in an encoding process, a dimension is excessively large. For example, when a length of the bit sequence is k bits, the dimension is 2 to the power of k, and a gradient chain is long. As a result, more time steps are required for transmission of the gradient chain, and problems such as gradient explosion and gradient vanishing may be caused.

## SUMMARY

This application provides a channel encoding/decoding method and an apparatus, to optimize a model that uses a neural network to perform channel encoding/decoding.

According to a first aspect, this application provides a channel encoding/decoding method. For example, the method is performed by an encoding device, a sending device, or an apparatus having an encoding function, for example, a chip. The method includes: obtaining a plurality of pieces of first information based on a to-be-sent bit sequence, where each piece of first information includes a multi-dimensional time step feature, the multi-dimensional time step feature is determined based on a plurality of bits in the bit sequence, a plurality of bits corresponding to a multi-dimensional time step feature included in an $i^{th}$ piece of first information and a plurality of bits corresponding to a multi-dimensional time step feature included in an $(i+1)^{th}$ piece of first information are partially the same, and i is a positive integer; encoding the plurality of pieces of first information into second information; and sending the second information.

According to the foregoing method, because the plurality of bits corresponding to the multi-dimensional time step feature included in the $i^{th}$ piece of first information and the plurality of bits corresponding to the multi-dimensional time step feature included in the $(i+1)^{th}$ piece of first information are partially the same, a local dependency between bits in the bit sequence may be obtained by obtaining the plurality of pieces of first information based on the to-be-sent bit sequence, and a global dependency between the bits in the bit sequence may be obtained by encoding the plurality of pieces of first information into the second information. Therefore, an encoding burden can be reduced, and problems such as gradient explosion and gradient vanishing are not easily caused. In addition, encoding performance of a medium-length sequence can be improved, and a training difficulty of an encoding model can be reduced.

In a possible design, when the plurality of pieces of first information are obtained based on the to-be-sent bit sequence, a time step feature extraction operation is performed on the to-be-sent bit sequence based on a preset stride and a preset group size, to obtain the plurality of pieces of first information, where the time step extraction operation is implemented through a neural network operation.

For example, the sending device may determine the to-be-sent bit sequence as a plurality of bit groups based on the preset stride and the preset group size, where each bit group includes bits of the preset group size, and adjacent bit groups include some same bits. Further, the sending device performs the time step feature extraction operation on the bits included in each bit group, to obtain a corresponding multi-dimensional time step feature, and uses the multi-dimensional time step feature as first information corresponding to each bit group.

According to the foregoing design, grouping is performed on the to-be-sent bit sequence based on the preset stride and the preset group size, and the time step feature extraction operation is performed through the neural network operation. Because the adjacent bit groups include some same bits, a local dependency between bits in the to-be-sent bit sequence can be obtained.

In a possible design, the bit sequence includes K bits, and K is a positive integer. When the plurality of pieces of first information are obtained based on the to-be-sent bit sequence, S bits are added to the K bits to obtain K+S bits, where S is a positive integer. A time step feature extraction operation is performed on the obtained K+S bits based on a preset stride and a preset group size, to obtain the plurality of pieces of first information, where the time step extraction operation is implemented through a neural network operation.

According to the foregoing design, some bits are added to the to-be-sent bit sequence, grouping is performed based on the preset stride and the preset group size, and the time step feature extraction operation is performed through the neural network operation. Because adjacent bit groups include some same bits, a local dependency between bits in a bit sequence obtained through addition can be obtained.

In a possible design, the neural network is a convolutional neural network or a fully connected neural network. It may be understood that the neural network herein may alternatively be another type of neural network.

In a possible design, a quantity of pieces of first information is K; and when the S bits are added to the K bits to obtain the K+S bits, P bits are added to each of a head and a tail of the K bits to obtain K+2P bits, where S=2P, P is a positive integer, the P bits added to the head are a first preset sequence, and the P bits added to the tail are a second preset sequence. When the time step feature extraction operation is performed on the obtained K+S bits based on the preset stride and the preset group size, to obtain the plurality of pieces of first information, the K+2P bits are processed via the convolutional neural network based on a stride of 1 and a convolution kernel size of 2P+1, to obtain the K pieces of first information.

When the stride is 1 and a sliding window size is 2P+1, first information whose quantity is the same as a quantity of bits of the to-be-sent bit sequence may be obtained.

In a possible design, a quantity of pieces of first information is K; and when the S bits are added to the K bits to obtain the K+S bits, P bits are added to each of a head and a tail of the K bits to obtain K+2P bits, where S=2P, P is a positive integer, the P bits added to the head are a first preset sequence, and the P bits added to the tail are a second preset sequence. When the time step feature extraction operation is performed on the obtained K+S bits based on the preset stride and the preset group size, to obtain the plurality of pieces of first information, K sliding windows are determined from the K+2P bits based on a stride of 1 and a sliding window size of 2P+1, the K pieces of first information are obtained via the fully connected neural network based on the K sliding windows.

In a possible design, the fully connected neural network is configured to output a corresponding multi-dimensional time step feature based on 2P+1 bits included in each sliding window.

In a possible design, the first preset bit sequence is an all-0 sequence or an all-1 sequence; and the second preset bit sequence is an all-0 sequence or an all-1 sequence.

According to a second aspect, this application provides a channel encoding/decoding method. For example, the method is performed by a decoding device, a receiving device, or an apparatus having a decoding function, for example, a chip. The method includes: receiving third information; decoding the third information into a plurality of pieces of fourth information, where each piece of fourth information includes a multi-dimensional time step feature; and obtaining a decoding result based on the plurality of pieces of fourth information, where the multi-dimensional time step feature included in each piece of fourth information corresponds to a plurality of bits in the decoding result, a plurality of bits corresponding to a multi-dimensional time step feature included in an i$^{th}$ piece of fourth information and a plurality of bits corresponding to a multi-dimensional time step feature included in an (i+1)$^{th}$ piece of fourth information are partially the same, and i is a positive integer.

According to the foregoing method, because the plurality of bits corresponding to the multi-dimensional time step feature included in the i$^{th}$ piece of fourth information and the plurality of bits corresponding to the multi-dimensional time step feature included in the (i+1)$^{th}$ piece of fourth information are partially the same, the received third information is decoded into the plurality of pieces of fourth information, and a bit sequence is obtained based on the plurality of pieces of fourth information. In this way, a decoding success rate can be increased.

In a possible design, when the decoding result is obtained based on the plurality of pieces of fourth information, the decoding result is obtained based on the plurality of pieces of fourth information, a preset stride, and a preset group size.

In a possible design, when the decoding result is obtained based on the plurality of pieces of fourth information, the preset stride, and the preset group size, the decoding result is obtained via a convolutional neural network based on the plurality of pieces of fourth information, the preset stride, and the preset group size.

In a possible design, when the decoding result is obtained based on the plurality of pieces of fourth information, the preset stride, and the preset group size, the decoding result is obtained via a fully connected neural network based on the plurality of pieces of fourth information, the preset stride, and the preset group size.

In a possible design, a quantity of pieces of fourth information is K, the decoding result includes K bits, and K is a positive integer.

According to a third aspect, this application provides a channel decoding method. For example, the method is performed by a decoding device, a receiving device, or an apparatus having a decoding function, for example, a chip. The method includes: receiving information 1; determining a plurality of pieces of information 2 based on the information 1 and a plurality of noise signals, where the plurality of noise signals are determined based on a signal-to-noise ratio; determining, based on the plurality of pieces of information 2, decoding results respectively corresponding to the plurality of pieces of information 2; and determining, based on the decoding results respectively corresponding to the plurality of pieces of information 2, a bit sequence corresponding to the information 1.

According to the foregoing design, because a decoding neural network is obtained through noisy training, and has good performance in a wide signal-to-noise ratio range, decoding results respectively corresponding to the plurality of noise signals may be obtained via the decoding neural network based on information 2 respectively corresponding to the plurality of noise signals, so that block error rate performance can be improved by selecting a correct codeword.

In a possible design, when the information 1 is received, the signal-to-noise ratio is obtained, and the plurality of noise signals are determined based on the signal-to-noise ratio.

According to the foregoing design, the signal-to-noise ratio is obtained when the information 1 is received, so that the plurality of noise signals can be obtained in real time.

In a possible design, when the plurality of pieces of information 2 are determined based on the information 1 and the plurality of noise signals, corresponding information 2 is obtained based on a linear combination of the information 1 and each of the plurality of noise signals.

In a possible design, when the decoding results respectively corresponding to the plurality of pieces of information 2 are determined based on the plurality of pieces of information 2, the plurality of pieces of information 2 are decoded via a decoding neural network, to obtain the decoding results respectively corresponding to the plurality of pieces of information 2.

According to a fourth aspect, a channel encoding/decoding apparatus is provided. The apparatus includes: a processing unit, configured to: obtain a plurality of pieces of first information based on a to-be-sent bit sequence, where each piece of first information includes a multi-dimensional time step feature, the multi-dimensional time step feature is determined based on a plurality of bits in the bit sequence, a plurality of bits corresponding to a multi-dimensional time step feature included in an $i^{th}$ piece of first information and a plurality of bits corresponding to a multi-dimensional time step feature included in an $(i+1)^{th}$ piece of first information are partially the same, and i is a positive integer; and encode the plurality of pieces of first information into second information; and a transceiver unit, configured to send the second information.

In a possible design, the processing unit is configured to: when obtaining the plurality of pieces of first information based on the to-be-sent bit sequence, perform a time step feature extraction operation on the to-be-sent bit sequence based on a preset stride and a preset group size, to obtain the plurality of pieces of first information, where the time step extraction operation is implemented through a neural network operation.

In a possible design, the bit sequence includes K bits, and K is a positive integer. The processing unit is configured to: when obtaining the plurality of pieces of first information based on the to-be-sent bit sequence, add S bits to the K bits to obtain K+S bits, where S is a positive integer; and perform a time step feature extraction operation on the obtained K+S bits based on a preset stride and a preset group size, to obtain the plurality of pieces of first information, where the time step extraction operation is implemented through a neural network operation.

In a possible design, the neural network is a convolutional neural network or a fully connected neural network.

In a possible design, a quantity of pieces of first information is K. The processing unit is configured to: when adding the S bits to the K bits to obtain the K+S bits, add P bits to each of a head and a tail of the K bits to obtain K+2P bits, where S=2P, P is a positive integer, the P bits added to the head are a first preset sequence, and the P bits added to the tail are a second preset sequence. The processing unit is configured to: when performing the time step feature extraction operation on the obtained K+S bits based on the preset stride and the preset group size, to obtain the plurality of pieces of first information, process the K+2P bits via the convolutional neural network based on a stride of 1 and a convolution kernel size of 2P+1, to obtain the K pieces of first information.

In a possible design, a quantity of pieces of first information is K. The processing unit is configured to: when adding the S bits to the K bits to obtain the K+S bits, add P bits to each of a head and a tail of the K bits to obtain K+2P bits, where S=2P, P is a positive integer, the P bits added to the head are a first preset sequence, and the P bits added to the tail are a second preset sequence. The processing unit is configured to: when performing the time step feature extraction operation on the obtained K+S bits based on the preset stride and the preset group size, to obtain the plurality of pieces of first information, determine K sliding windows from the K+2P bits based on a stride of 1 and a sliding window size of 2P+1; and obtain the K pieces of first information via the fully connected neural network based on the K sliding windows.

In a possible design, the fully connected neural network is configured to output a corresponding multi-dimensional time step feature based on 2P+1 bits included in each sliding window.

In a possible design, the first preset bit sequence is an all-0 sequence or an all-1 sequence; and the second preset bit sequence is an all-0 sequence or an all-1 sequence.

According to a fifth aspect, this application provides a channel decoding apparatus. The apparatus includes: a transceiver unit, configured to receive third information; and a processing unit, configured to: decode the third information into a plurality of pieces of fourth information, where each piece of fourth information includes a multi-dimensional time step feature; and obtain a decoding result based on the plurality of pieces of fourth information, where the multi-dimensional time step feature included in each piece of fourth information corresponds to a plurality of bits in the decoding result, a plurality of bits corresponding to a multi-dimensional time step feature included in an $i^{th}$ piece of fourth information and a plurality of bits corresponding to a multi-dimensional time step feature included in an $(i+1)^{th}$ piece of fourth information are partially the same, and i is a positive integer.

In a possible design, the processing unit is configured to: when obtaining the decoding result based on the plurality of pieces of fourth information, obtain the decoding result based on the plurality of pieces of fourth information, a preset stride, and a preset group size.

In a possible design, the processing unit is configured to: when obtaining the decoding result based on the plurality of pieces of fourth information, the preset stride, and the preset group size, obtain the decoding result via a convolutional neural network based on the plurality of pieces of fourth information, the preset stride, and the preset group size.

In a possible design, the processing unit is configured to: when obtaining the decoding result based on the plurality of pieces of fourth information, the preset stride, and the preset group size, obtain the decoding result via a fully connected neural network based on the plurality of pieces of fourth information, the preset stride, and the preset group size.

In a possible design, a quantity of pieces of fourth information is K, the decoding result includes K bits, and K is a positive integer.

According to a sixth aspect, this application provides a communication apparatus. The apparatus includes: a transceiver unit, configured to receive information 1; and a processing unit, configured to: determine a plurality of pieces of information 2 based on the information 1 and a plurality of noise signals, where the plurality of noise signals are determined based on a signal-to-noise ratio; determine, based on the plurality of pieces of information 2, decoding results respectively corresponding to the plurality of pieces of information 2; and determine, based on the decoding results respectively corresponding to the plurality of pieces of information 2, a bit sequence corresponding to the information 1.

In a possible design, the processing unit is configured to: when receiving the information 1, obtain the signal-to-noise ratio, and determine the plurality of noise signals based on the signal-to-noise ratio.

In a possible design, the processing unit is configured to: when determining the plurality of pieces of information 2 based on the information 1 and the plurality of noise signals, obtain corresponding information 2 based on a linear combination of the information 1 and each of the plurality of noise signals.

In a possible design, the processing unit is configured to: when determining, based on the plurality of pieces of information 2, the decoding results respectively corresponding to the plurality of pieces of information 2, decode the plurality of pieces of information 2 via a decoding neural network, to obtain the decoding results respectively corresponding to the plurality of pieces of information 2.

For technical effects of the fourth aspect to the sixth aspect, refer to corresponding technical effects of the first aspect to the third aspect.

According to a seventh aspect, this application further provides an apparatus. The apparatus may perform the foregoing method design. The apparatus may be a chip or a circuit that can perform the functions corresponding to the foregoing method, or a device including the chip or the circuit.

In a possible implementation, the apparatus includes: a processor, configured to execute a computer program or instructions, where when the computer program or the instructions are executed, the apparatus or a device on which the apparatus is installed is enabled to perform the method in any one of the foregoing possible designs.

In a possible implementation, the apparatus may further include a communication interface. The communication interface may be a transceiver. Alternatively, if the apparatus is a chip or a circuit, the communication interface may be an input/output interface of the chip, for example, an input/output pin.

The apparatus may further include: a memory, configured to store the computer program or the instructions, where the memory is coupled to the processor.

In a possible design, the apparatus includes corresponding functional units, separately configured to implement the steps in the foregoing method. The function may be implemented by hardware, or may be implemented by executing corresponding software by hardware. The hardware or the software includes one or more units that correspond to the foregoing functions.

According to an eighth aspect, this application provides a computer-readable storage medium. The computer-readable storage medium stores a computer program, and when the computer program runs on an apparatus, the method according to any one of the foregoing possible designs is performed.

According to a ninth aspect, this application provides a computer program product. The computer program product includes a computer program, and when the computer program runs on an apparatus, the method according to any one of the foregoing possible designs is performed.

## BRIEF DESCRIPTION OF DRAWINGS

FIG. 1 is a diagram of an architecture of a mobile communication system to which this application is applied;
FIG. 2 is a diagram of a training method for supervised learning according to this application;
FIG. 3 is a diagram of a process of minimizing a loss function according to this application;
FIG. 4 is a diagram of a backpropagation process according to this application;
FIG. 5 is a diagram of an autoencoder according to this application;
FIG. 6 is a diagram of channel encoding/decoding according to this application;
FIG. 7 is a diagram of an encoding process of a recurrent neural network according to this application;
FIG. 8 is a diagram of simulating an encoding process of a turbo code according to this application;
FIG. 9 is an overview flowchart of a channel encoding/decoding method according to this application;
FIG. 10 is a diagram of obtaining a plurality of pieces of first information through a convolution operation according to this application;
FIG. 11 is a diagram of obtaining a plurality of pieces of first information via a neural network according to this application;
FIG. 12 is an overview flowchart of a decoding method according to this application;
FIG. 13 is a flowchart in which a receiving device determines a bit sequence corresponding to information 1 according to this application;
FIG. 14 is a first diagram of a structure of a communication apparatus according to this application; and
FIG. 15 is a second diagram of a structure of a communication apparatus according to this application.

## DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have", and any other variants are intended to cover a non-exclusive inclusion, so that a process, method, system, product, or device that includes a series of units is not necessarily limited to those units, but may include other units not expressly listed or inherent to the process, method, system, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one (piece) of the following" or a similar expression thereof means any combination of these items, including a singular (piece) or any combination of plural (pieces). For example, at least one item (piece) of a, b, or c may indicate a, b, c, a and b, a and c, b and c, or a, b, and c, where a, b, and c may be in a singular form or a plural form.

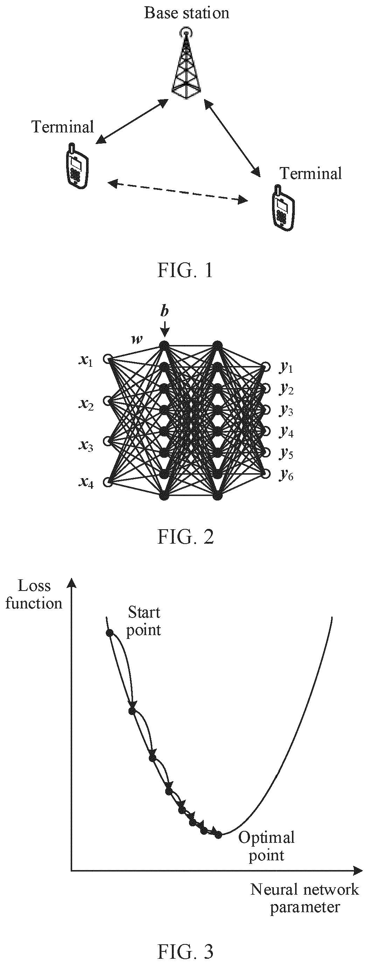

This application may be applied to wireless communication systems such as a 5G communication system, a 6G communication system, a satellite communication system, and a short distance communication system. A possible system architecture is shown in FIG. 1. The wireless communication system may include cells, each cell includes a base station (base station, BS), and the base station provides a communication service for a plurality of mobile stations (mobile stations, MSs). The wireless communication system may alternatively perform point-to-point communication. For example, a plurality of terminals communicate with each other.

It should be noted that the wireless communication system mentioned in this application includes but is not limited to: a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, and three application scenarios of a 5G mobile communication system: enhanced mobile broadband (enhanced mobile broadband, eMBB), ultra-reliable and low latency communications (ultra-reliable and low latency communication, URLLC), and massive machine type communication (massive machine type communication, mMTC).

In this application, the base station is an apparatus that is deployed in a radio access network and that provides a wireless communication function for the MS. The base station may include a macro base station, for example, a micro base station (also referred to as a small cell), a relay station, an access point, and the like in various forms. In systems using different radio access technologies, names of devices having a base station function may be different. For example, the device is referred to as an evolved NodeB (evolved NodeB, eNB or eNodeB) in an LTE system, and is referred to as a NodeB (NodeB, NB) in a 3$^{rd}$ generation (3$^{rd}$ Generation, 3G) system. For ease of description, in all embodiments of this application, the foregoing apparatus that provides the wireless communication function for the MS is collectively referred to as a network device.

The MS included in this application may include various handheld devices, vehicle-mounted devices, wearable devices, or computing devices that have the wireless communication function, or other processing devices connected to a wireless modem. The MS may also be referred to as a terminal (terminal), or the MS may be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like. For ease of description, in all embodiments of this application, the MS is collectively referred to as a terminal device.

For ease of understanding of embodiments of this application, several basic concepts in embodiments of this application are briefly described.

1. Artificial intelligence (artificial intelligence, AI)

An artificial intelligence (artificial intelligence, AI) technology has been successfully applied in fields of image processing and natural language processing, and the increasingly mature AI technology will play an important role in promoting evolution of a future mobile communication network technology. Currently, the academic community has a large amount of research on applying the AI technology to a network layer (such as network optimization, mobility management, or resource allocation), a physical layer (such as channel encoding/decoding, channel prediction, or a receiver), and the like. Common AI technologies include reinforcement learning, supervised learning, unsupervised learning, and the like. Main research directions of using the AI technology to design physical layer modules are: module design (such as pilot-channel estimation and symbol mapping-demodulation) corresponding to a transmit end and a receive end, multi-module joint optimization (such as joint design of the receiver), and joint optimization of corresponding modules (such as design of encoding and decoding modules) at the transmit end and the receive end.

2. Supervised learning

The supervised learning is the most widely studied and applied technology. An objective of the supervised learning is to give a training set (including a plurality of pairs of data and labels) and learn a mapping relationship between input (namely, the data) and output (namely, the labels) in the training set. In addition, it is expected that the mapping relationship can be further applied to data beyond the training set. The training set may also be referred to as a set of correct input and output pairs.

As shown in FIG. 2, the following uses a fully connected neural network as an example to describe a training method for supervised learning.

The fully connected neural network is also called a multilayer perceptron (multilayer perceptron, MLP). One MLP includes one input layer (for example, the leftmost column in the figure), one output layer (for example, the rightmost column in the figure), and a plurality of hidden layers (for example, middle columns other than the leftmost and rightmost columns in the figure). Each layer may include a plurality of nodes, and each node is referred to as a neuron. Neurons at two adjacent layers are connected to each other. For neurons at two adjacent layers, output h of a neuron at a lower layer is a value obtained by performing an activation function on a weighted sum of all neurons *x* at an upper layer that are connected to the neuron at the lower layer.

A matrix may be represented as:

$$h = f(wx + b)$$

*w* is a weight matrix, *b* is a bias vector, and *f* is the activation function.

In this case, output of the neural network may be recursively expressed as:

$$y = f_n(w_n f_{n-1}(...) + b_n)$$

*n is* a quantity of hidden layers.

Briefly, the neural network may be understood as a mapping relationship from an input data set to an output data set. Generally, the neural network is randomly initialized, and a process of obtaining the mapping relationship from random *w* and *b* by using existing data is referred to as neural network training. A specific training manner is to evaluate an output result of the neural network by using a loss function (loss function) and back propagate an error. In this way, w and *b* can be iteratively optimized by using a gradient descent method, until the loss function reaches a minimum value, as shown in FIG. 3.

A gradient descent process may be represented as:

$$\boldsymbol{\theta} \leftarrow \boldsymbol{\theta} - \eta \frac{\partial L}{\partial \boldsymbol{\theta}}$$

$\theta$ is a to-be-optimized parameter (for example, w and $\boldsymbol{b}$), $L$ is the loss function, $\eta$ is a learning rate, and controls a gradient descent step.

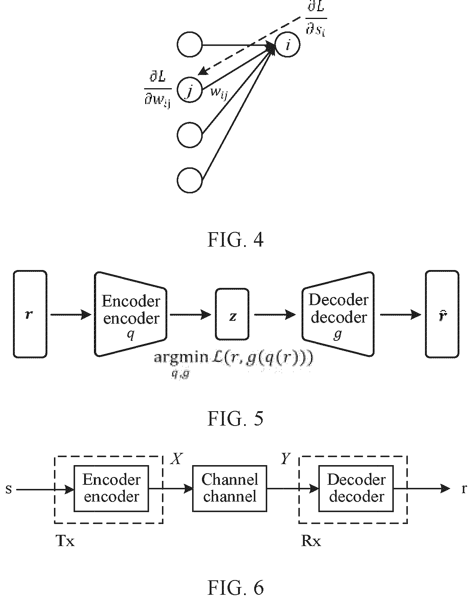

A backpropagation process uses a chain rule for obtaining a partial derivative. To be specific, a gradient of a parameter of a previous layer may be recursively calculated based on a gradient of a parameter of a followed layer. As shown in FIG. 4, a formula may be expressed as follows:

$$\frac{\partial L}{\partial w_{ij}} = \frac{\partial L}{\partial s_i} \frac{\partial s_i}{\partial w_{ij}}$$

$w_{ij}$ is a weight obtained by connecting a node $j$ to a node $i$, $s_i$ is an input weighted sum on the node $i$, and $s_i$ is considered as an intermediate layer.

3. Autoencoder

The autoencoder is a common AI technology in the computer science field, and is a type of the unsupervised learning. Input data r is mapped or compressed to a latent space variable $z$ by using a function $q$, and then the original data is restored from the latent space variable $z$ by using a function $g$. The function $q$ and the function $g$ may be implemented by using the neural network. In this case, an optimization objective may be to search for parameters of the function $q$ and the function $g$, to minimize an error of the restored data. From a perspective of a task completed by the autoencoder, the task may also be considered as a supervised learning process with known labels (generally the input data), as shown in FIG. 5.

In general, a task completed by a communication system is very similar to the task completed by the autoencoder, and the communication system may be regarded as an autoencoder implemented in a distributed manner. For a wireless communication system, it may be considered that a transmitter sends a latent space variable (waveform) through a channel, and information restoration is performed at a receiver. It should be noted that, a transmission problem does not need to be considered for the latent space variable of the autoencoder in the computer field, and impact caused by transmission also does not need to be considered for information recovery on a decoder side.

4. Channel encoding/decoding

Forward error correction (forward error correction, FEC) is a kind of channel encoding/decoding, is one of key technologies of a communication system, and is very important to improve sensitivity and an anti-interference capability of the system. As shown in FIG. 6, in wireless communication, data is transmitted between devices by using a radio signal. The radio signal is sensitive and fragile, and is vulnerable to interference and weak coverage. As a result, sent data and received data may be inconsistent sometimes. To correct an error, a channel encoding/decoding technology needs to be introduced.

In essence, channel encoding/decoding is to improve an error correction capability by adding a redundancy. It is assumed that a quantity of bits of information that originally needs to be sent is k, and a quantity of bits of information obtained through the channel encoding is n, where k<n. In this case, a bit rate of the channel encoding is R=k/n. In this case, the n bits are modulated (for example, binary phase shift keying (binary phase shift keying, BPSK) or quadrature phase shift keying (quadrature phase shift keying, QPSK) is performed) and then transmitted through a channel. After receiving noisy data, the receive end first demodulates the data, and then performs channel decoding to restore the bits of the originally sent information. Conventional common channel encoding manners include a turbo code, a low-density parity-check (low-density parity-check, LDPC) code, a polar (Polar) code, and the like.

5. Recurrent neural network

The recurrent neural network is a type of a recursive neural network (recursive neural network) in which sequence (sequence) data is used as input, recursion (recursion) is performed in a sequence evolution direction, and all nodes (recurrent units) are connected in a chain form.

The recurrent neural network has a strong model fitting capability for serialized data. A specific structure is as follows: The recurrent neural network stores and memorizes previous information at the hidden layer, and then inputs the information to a hidden layer unit for current calculation. In other words, internal nodes at the hidden layer are no longer independent of each other, but transfer messages to each other. For example, input of the hidden layer may include two parts: output of the input layer and output of the hidden layer at a previous moment.

A time step (time step) of the recurrent neural network means that the recurrent neural network considers that each piece of input data is related to how many pieces of previous data that is successively input. For example, sequence data "...ABCDBCEDF..." exists. When the time step is 3, if input data is "D" in model prediction, a probability that predicted output is B is higher if previously received data is "B" and "C", and a probability that predicted output is F is higher if previously received data is "C" and "E".

The RNN is prone to extreme nonlinear behavior, including gradient vanishing (gradient vanishing) and gradient explosion (gradient explosion), after an error gradient is back propagated based on a plurality of time steps. Different from a feedforward neural network in which gradient vanishing and gradient explosion occur only in a depth structure, and can be alleviated by designing a gradient ratio, in the RNN, the foregoing phenomenon may occur provided that a sequence length is sufficient. It is understood that recursive calculation of the RNN is similar to continuous matrix multiplication. Because the RNN processes all time steps by using a fixed weight, as a quantity of time steps increases, a weight coefficient inevitably increases or decreases exponentially, causing a large gradient change.

A long short-term memory neural network is a special RNN, which can learn and capture a dependency with a large time step distance in a time series.

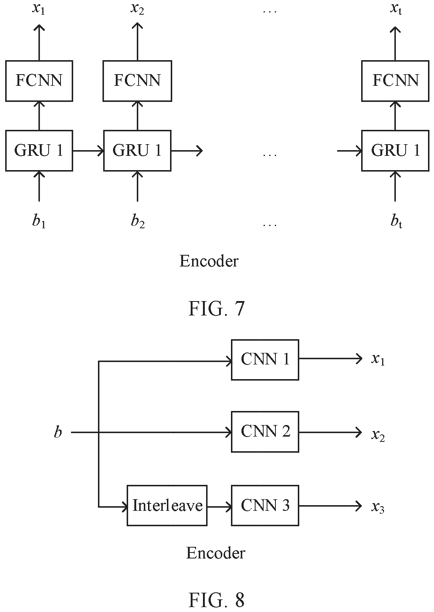

As shown in FIG. 7, a gated recurrent unit (gated recurrent unit, GRU) is a type of the recurrent neural network. The GRU is connected to a fully connected network (fully connected neural network, FCNN). $\{b_1, b_2, ..., b_t\}$ is a to-be-sent bit sequence at an encoder (namely, a transmit end). At the encoder, $b_1$ is encoded into $X_1$ by using a corresponding GRU and FCNN; $b_2$ is encoded into $X_2$ by using a corresponding GRU and FCNN; ...; and $b_t$ is encoded into $X_t$ by using a corresponding GRU and FCNN. Input of the GRU corresponding to $b_2$ may include two parts: output of the GRU corresponding to $b_1$ and $b_2$; ...; and input of the GRU corresponding to $b_t$ may include two parts: output of a GRU corresponding to $b_{t-1}$ and $b_t$.

Currently, another channel encoding/decoding solution is to design a neural network into a structure similar to a turbo structure in a conventional code, and simulate an encoding/decoding process of a turbo code. Similar to the turbo code, for example, as shown in FIG. 8, three different neural networks are designed at the encoder, and the 3rd branch interleaves information bits. Because the turbo code is an iterative decoding structure, training time is long, a training difficulty is great, and a high training skill is required.

Based on this, this application provides a channel encoding/decoding method, to optimize a model that uses a neural network to perform channel encoding/decoding. The following method is described by using an example in which the method is performed by a sending device and a receiving device. In addition, the sending device and the receiving device may be replaced with an encoder and a decoder, or an encoding device and a decoding device, or an apparatus (for example, an encoding chip) with an encoding function and an apparatus (for example, a decoding chip) with an encoding function. In the following method, the sending device may be a terminal device, and the receiving device may be a network device. Alternatively, the sending device may be a network device, and the receiving device may be a terminal device.

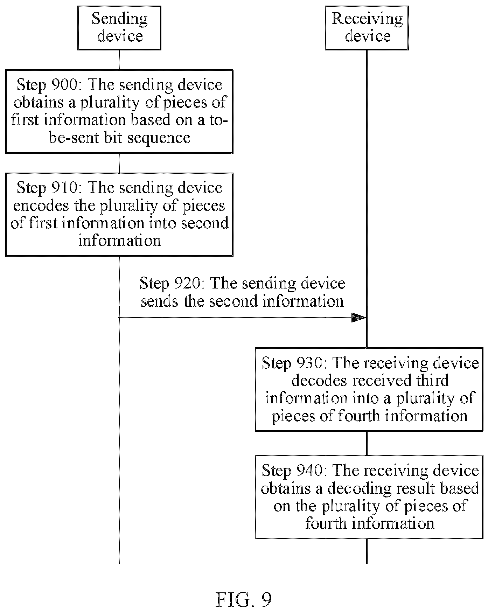

As shown in FIG. 9, the method includes the following steps.

Step 900: The sending device obtains a plurality of pieces of first information based on a to-be-sent bit sequence.

Each piece of first information includes a multi-dimensional time step feature, and the multi-dimensional time step feature is determined based on a plurality of bits in the bit sequence. A plurality of bits corresponding to a multi-dimensional time step feature included in an $i^{th}$ piece of first information and a plurality of bits corresponding to a multi-dimensional time step feature included in an $(i+1)^{th}$ piece of first information are partially the same, and i is a positive integer.

The to-be-sent bit sequence includes a plurality of bits, and the to-be-sent bit sequence may also be referred to as a to-be-encoded bit sequence or a to-be-sent information bit sequence.

For example, that each piece of first information includes a multi-dimensional time step feature means that each piece of first information includes a plurality of time step features. The time step feature herein is used to describe or represent a structure of local bits in the to-be-sent bit sequence, or is used to describe or represent a relationship between the local bits in the to-be-sent bit sequence. The time step feature may be alternatively replaced with another description manner. This is not limited in this application. In addition, that each piece of first information includes a multi-dimensional time step feature may also be described as follows: Each piece of first information includes a plurality of elements. The plurality of elements are determined based on the plurality of bits in the bit sequence, and the plurality of elements may form a vector. Therefore, the first information may also be referred to as a feature sequence, namely, a feature vector. In addition, a dimension of the multi-dimensional time step feature may be set as required.

It may be understood that a quantity of bits corresponding to the multi-dimensional time step feature included in the $i^{th}$ piece of first information may be the same as or different from a quantity of bits corresponding to the multi-dimensional time step feature included in the $(i+1)^{th}$ piece of first information. This is not limited in this application. The plurality of bits corresponding to the multi-dimensional time step feature included in the $i^{th}$ piece of first information and the plurality of bits corresponding to the multi-dimensional time step feature included in the $(i+1)^{th}$ piece of first information are partially the same. In other words, a plurality of bits corresponding to any two adjacent pieces of first information in the plurality of pieces of first information may be partially the same, or it is described as that there are overlapping bits in a plurality of bits corresponding to any two adjacent pieces of first information in the plurality of pieces of first information. Therefore, according to the foregoing design, a local dependency may be obtained for the plurality of pieces of first information.

For example, if the plurality of bits corresponding to the multi-dimensional time step feature included in the $i^{th}$ piece of first information include $\{b_1, b_2, b_3, b_4, b_5\}$, and the plurality of bits corresponding to the multi-dimensional time step feature included in the $(i+1)^{th}$ piece of first

information include $\{b_3, b_4, b_5\}$, $\{b_3, b_4, b_5\}$ are some same bits of the plurality of bits.

For another example, if the plurality of bits corresponding to the multi-dimensional time step feature included in the $i^{th}$ piece of first information include $\{b_1, b_2, b_3, b_4, b_5\}$, and the plurality of bits corresponding to the multi-dimensional time step feature included in the $(i+1)^{th}$ piece of first information include $\{b_3, b_4, b_5, b_6, b_7\}$, $\{b_3, b_4, b_5\}$ are some same bits of the plurality of bits.

For example, the sending device may obtain the plurality of pieces of first information based on the to-be-sent bit sequence in, but not limited to, the following two possible implementations.

In a first implementation, the sending device may perform a time step feature extraction operation on the to-be-sent bit sequence based on a preset stride and a preset group size, to obtain the plurality of pieces of first information.

For example, the sending device may determine the to-be-sent bit sequence as a plurality of bit groups based on the preset stride and the preset group size, where each bit group includes bits of the preset group size, and adjacent bit groups include some same bits. Further, the sending device performs the time step feature extraction operation on the bits included in each bit group, to obtain a corresponding multi-dimensional time step feature, and uses the multi-dimensional time step feature as first information corresponding to each bit group. For example, the time step extraction operation is implemented through a neural network operation, and a neural network is a convolutional neural network or a fully connected neural network. A specific type of the neural network is not limited in this application.

For example, if the to-be-sent bit sequence is $\{b_1, b_2, ..., b_8\}$, the preset stride is two bits, and the preset group size is four bits, the sending device may determine, based on the preset stride of two bits and the preset group size of four bits, $\{b_1, b_2, ..., b_8\}$ as three bit groups: $\{b_1, b_2, b_3, b_4\}$, $\{b_3, b_4, b_5, b_6\}$, and $\{b_5, b_6, b_7, b_8\}$. Further, the sending device performs the time step feature extraction operation on $\{b_1, b_2, b_3, b_4\}$ to obtain a $1^{st}$ piece of first information, performs the time step feature extraction operation on $\{b_3, b_4, b_5, b_6\}$ to obtain a $2^{nd}$ piece of first information, and performs the time step feature extraction operation on $\{b_5, b_6, b_7, b_8\}$ to obtain a $3^{rd}$ piece of first information, that is, three pieces of first information are obtained in total.

In a second implementation, the sending device may add S bits to K bits to obtain K+S bits, where the to-be-sent bit sequence includes the K bits, and S is a positive integer. Further, the sending device may perform a time step feature extraction operation on the obtained K+P bits based on a preset stride and a preset group size, to obtain the plurality of pieces of first information.

For example, the sending device adds, in, but not limited to, the following manners, the S bits to the K bits to obtain the K+S bits.

Manner a: The sending device adds the S bits to a head of the K bits to obtain the K+S bits.

Manner b: The sending device adds the S bits to a tail of the K bits to obtain the K+S bits.

Manner c: The sending device adds S1 bits to a head of the K bits and adds S2 bits to a tail of the K bits to obtain the K+S bits, where S1+S2=S, and S1 and S2 are positive integers.

Manner d: The sending device adds several bits to the K bits in an interpolated manner to obtain the K+S bits.

For example, if the to-be-sent bit sequence is $\{b_1, b_2, ..., b_8\}$, and S=4, optionally, all four bits are 0, and the sending device may add one bit at an interval of two bits in the eight bits, to obtain 12 bits: $\{b_1, b_2, 0, b_3, b_4, 0, b_5, b_6, 0, b_7, b_8, 0\}$.

It may be understood that a specific manner in which the sending device adds the S bits to the K bits is not limited in this application, and the foregoing manner a to the foregoing manner d are merely examples.

For example, the time step extraction operation is implemented through a neural network operation, and a neural network is a convolutional neural network or a fully connected neural network. A specific type of the neural network is not limited in this application.

For the second possible implementation, the following two scenarios may be specifically further included.

Scenario 1: The to-be-sent bit sequence includes the K bits, a quantity of pieces of first information is K, K is a positive integer, and K represents a length of the bit sequence. In other words, a quantity of bits included in the bit sequence is the same as the quantity of pieces of first information.

When the quantity of bits included in the bit sequence is the same as the quantity of pieces of first information, the sending device may determine the plurality of pieces of first information in, but not limited to, the following two manners.

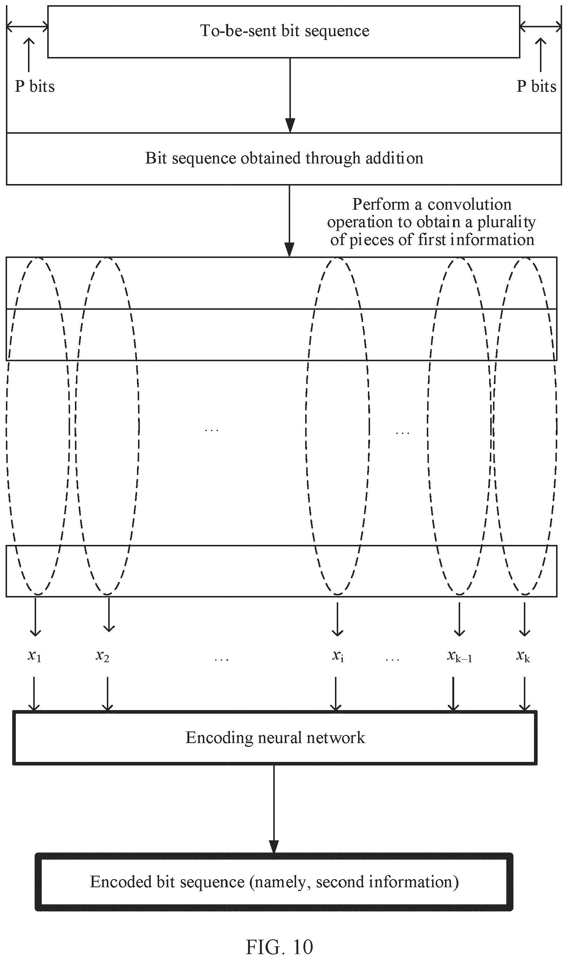

Manner 1: The sending device adds P bits to each of the head and the tail of the K bits to obtain K+2P bits, where S=2P, P is a positive integer, the P bits added to the head are a first preset sequence, and the P bits added to the tail are a second preset sequence. Further, the sending device processes the obtained K+2P bits via a convolutional neural network element based on a stride of 1 and a convolution kernel size of 2P+1, to obtain the K pieces of first information. This may also be described as that the sending device performs a convolutional neural network operation on the obtained K+2P bits via the convolutional neural network element based on the stride of 1 and the convolution kernel size of 2P+1, to obtain the K pieces of first information. This is shown in FIG. 10.

It may be understood that the first preset sequence includes the P bits, and values of the P bits may be the same or different. The second preset sequence includes the P bits, and values of the P bits may be the same or different. The first preset sequence and the second preset sequence may be the same or different.

For example, the first preset sequence may be an all-0 sequence or an all-1 sequence; and the second preset sequence may be an all-0 sequence or an all-1 sequence.

For example, the sending device adds P bits of 0 to each of a head and a tail of the to-be-sent bit sequence. If K=10, the to-be-sent bit sequence is $\{b_1, b_2, ..., b_{10}\}$, and P=2, K+2P=14, and the sending device adds two bits of 0 to each of the head and the tail of the bit sequence. In this case, a bit sequence obtained through addition is $\{0, 0, b_1, b_2, ..., b_{10}, 0, 0\}$.

It may be understood that, when the stride is 1 and the convolution kernel size is 2P+1, first information whose quantity is the same as the quantity of bits of the to-be-sent bit sequence may be obtained.

For example, if K=10, the to-be-sent bit sequence is $\{b_1, b_2, ..., b_{10}\}$, and P=2, K+2P=14, 2P+1=5, and a bit sequence obtained through addition is $\{0, 0, b_1, b_2, ..., b_{10}, 0, 0\}$. The sending device may perform the convolutional neural network operation based on the stride of 1 and the convolution kernel size of five bits, where a 1st bit group on which the convolutional neural network operation is performed includes $\{0, 0, b_1, b_2, b_3\}$, where a 2nd bit group on which the convolutional neural network operation is performed includes $\{0, b_1, b_2, b_3, b_4\}$, a 3rd bit group on which the convolutional neural network operation is performed includes $\{b_1, b_2, b_3, b_4, b_5\}$, a 4th bit group on which the convolutional neural network operation is performed includes $\{b_2, b_3, b_4, b_5, b_6\}$, a 5th bit group on which the convolutional neural network operation is performed includes $\{b_3, b_4, b_5, b_6, b_7\}$, a 6th bit group on which the convolutional neural network operation is performed includes $\{b_4, b_5, b_6, b_7, b_8\}$, a 7th bit group on which the convolutional neural network operation is performed includes $\{b_5, b_6, b_7, b_8, b_9\}$, an 8th bit group on which the convolutional neural network operation is performed includes $\{b_6, b_7, b_8, b_9, b_{10}\}$, a 9th bit group on which the convolutional neural network operation is performed includes $\{b_7, b_8, b_9, b_{10}, 0\}$, and a 10th bit group on which the convolutional neural network operation is performed includes $\{b_8, b_9, b_{10}, 0, 0\}$.

For example, each of the K pieces of first information includes an F-dimensional time step feature, and F is an integer greater than or equal to 2. F may also be referred to as a quantity of output channels. For example, as shown in FIG. 10, the K pieces of first information include $\{x_1, x_2, ..., x_K\}$, $x_i$ is an F-dimensional vector, and a value of i ranges from 1 to K.

It should be noted that a value of a quantity of added bits, a value of the stride, and a value of the convolution kernel size in the foregoing manner 1 are merely examples, and are not intended to limit this application. It may be understood that the sending device may reset at least one of the value of the quantity of added bits, the value of the stride, or the value of the convolution kernel size, so that the quantity of pieces of first information determined by the sending device is K.

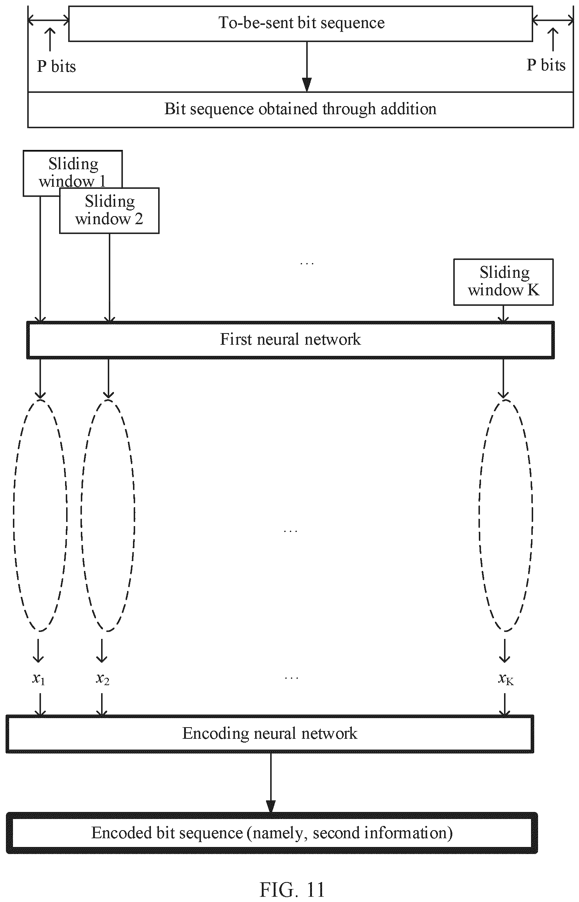

Manner 2: The sending device adds P bits to each of the head and the tail of the K bits to obtain K+2P bits, where S=2P, P is a positive integer, the P bits added to the head are a first preset sequence, and the P bits added to the tail are a second preset sequence. Further, as shown in FIG. 11, the sending device determines K sliding windows from the K+2P bits based on a stride of 1 and a sliding window size of 2P+1, and obtains the K pieces of first information via the fully connected neural network based on the K sliding windows.

It may be understood that a method for obtaining the K+2P bits in the manner 2 is similar to that in the manner 1, and details are not described herein again.

For example, after obtaining the K+2P bits, the sending device determines the K sliding windows starting from a 1st bit in the K+2P bits based on the stride of 1 and the sliding window size of 2P+1, where a 1st sliding window includes the 1st bit to a $(2P+1)$th bit, and there are 2P+1 bits in total; a 2nd sliding window includes a 2nd bit to a $(2P+2)$th bit, and there are 2P+1 bits in total; ...; and a $K$th sliding window includes a $K$th bit to a $(K+2P)$th bit, and there are 2P+1 bits in total.

It may be understood that, when the stride is 1 and the sliding window size is 2P+1, first information whose quantity is the same as the quantity of bits of the to-be-sent bit sequence may be obtained.

For example, the sending device inputs bits included in each sliding window into an input layer of the fully connected neural network, to obtain first information that is output by an output layer of the fully connected neural network and that corresponds to the sliding window. The fully connected neural network is configured to output a corresponding multi-dimensional time step feature based on 2P+1 bits included in each sliding window. In addition, the fully connected neural network may be replaced with another neural network. This is not limited in this application.

For example, if K=10, the to-be-sent bit sequence is $\{b_1, b_2, ..., b_{10}\}$, and P=2, K+2P=14, 2P+1=5, and the sending device adds two bits of 0 to a head and a tail of the bit sequence. In this case, a bit sequence obtained through addition is $\{0, 0, b_1, b_2, ..., b_{10}, 0, 0\}$. In this case, the 1st sliding window includes $\{0, 0, b_1, b_2, b_3\}$, the 2nd sliding window includes $\{0, b_1, b_2, b_3, b_4\}$, a 3rd sliding window includes $\{b_1, b_2, b_3, b_4, b_5\}$, a 4th sliding window includes $\{b_2, b_3, b_4, b_5, b_6\}$, a 5th sliding window includes $\{b_3, b_4, b_5, b_6, b_7\}$, a 6th sliding window includes $\{b_4, b_5, b_6, b_7, b_8\}$, a 7th sliding window includes $\{b_5, b_6, b_7, b_8, b_9\}$, an 8th sliding window includes $\{b_6, b_7, b_8, b_9, b_{10}\}$, a 9th sliding window includes $\{b_7, b_8, b_9, b_{10}, 0\}$, and a 10th sliding window includes $\{b_8, b_9, b_{10}, 0, 0\}$.

Further, the sending device inputs $\{0, 0, b_1, b_2, b_3\}$ included in the 1st sliding window into the input layer of the fully connected neural network, to obtain a multi-dimensional time step feature that is output by the output layer of the fully connected neural network and that corresponds to the bits included in the 1st sliding window, and the multi-dimensional time step feature is denoted as

a 1st piece of first information. The sending device inputs $\{0, b_1, b_2, b_3, b_4\}$ included in the 2nd sliding window into the input layer of the fully connected neural network, to obtain a multi-dimensional time step feature that is output by the output layer of the fully connected neural network and that corresponds to the bits included in the 2nd sliding window, and the multi-dimensional time step feature is denoted as a 2nd piece of first information. The rest may be deduced by analogy. The sending device inputs $\{b_8, b_9, b_{10}, 0, 0\}$ included in the 10th sliding window into the input layer of the fully connected neural network, to obtain a multi-dimensional time step feature that is output by the output layer of the fully connected neural network and that corresponds to the bits included in the 10th sliding window, and the multi-dimensional time step feature is denoted as a 10th piece of first information. That is, the sending device obtains 10 pieces of first information in total, and the quantity is the same as the quantity of bits included in the to-be-sent bit sequence.

For example, each of the K pieces of first information includes an F-dimensional time step feature, and F is an integer greater than or equal to 2. F may also be referred to as a quantity of output channels. An $i^{th}$ sliding window corresponds to the $i^{th}$ piece of first information, and an F-dimensional time step feature included in the $i^{th}$ piece of first information is an F-dimensional time step feature corresponding to the 2P+1 bits included in the $i^{th}$ sliding window. For example, as shown in FIG. 11, the K pieces of first information include $\{x_1, x_2, ..., x_K\}$, $x_i$ is an F-dimensional vector, and a value of i ranges from 1 to K.

It should be noted that a value of a quantity of added bits, a value of the stride, and a value of the sliding window size in the foregoing manner 2 are merely examples, and are not intended to limit this application. It may be understood that the sending device may reset at least one of the value of the quantity of added bits, the value of the stride, or the value of the sliding window size, so that the quantity of pieces of first information determined by the sending device is K.

Scenario 2: The to-be-sent bit sequence includes the K bits, a quantity of pieces of first information is M, K represents a length of the bit sequence, and K and M are positive integers, where K>M, or K<M. In other words, a quantity of bits included in the bit sequence is different from the quantity of pieces of first information.

When the quantity of bits included in the bit sequence is different from the quantity of pieces of first information, the sending device may determine the plurality of pieces of first information in, but not limited to, the following two manners.

Manner A: Similar to the foregoing manner 1, the sending device adds P1 bits to the head of the K bits and adds P2 bits to the tail of the K bits to obtain K+P1+P2 bits, where P1 and P2 are integers greater than or equal to 0. The sending device performs a convolutional neural network operation on the obtained K+P1+P2 bits based on the preset stride and a preset convolution kernel size, to obtain the M pieces of first information.

For example, the preset stride may be greater than or equal to one bit, and the preset convolution kernel size may be greater than or equal to two bits.

Manner B: Similar to the foregoing manner 2, the sending device adds P1 bits to the head of the K bits and adds P2 bits to the tail of the K bits to obtain K+P1+P2 bits, where P1 and P2 are integers greater than or equal to 0. The sending device determines a plurality of sliding windows from the obtained K+P1+P2 bits based on the preset stride and a preset sliding window size, and obtains the M pieces of first information via a fully connected neural network based on the plurality of sliding windows.

For example, the preset stride may be greater than or equal to one bit, and the preset sliding window size may be greater than or equal to two bits.

The fully connected neural network may be alternatively replaced with another type of neural network. This is not limited in this application. It should be noted that a function of the fully connected neural network herein is similar to that of the fully connected neural network in the manner 2, but parameters in the fully connected neural networks are different.

Step 910: The sending device encodes the plurality of pieces of first information into second information.

For example, when the sending device encodes the plurality of pieces of first information into the second information, the sending device inputs the plurality of pieces of first information into an input layer of an encoding neural network, to obtain second information output by an output layer of the encoding neural network. The encoding neural network element is configured to encode a multi-dimensional time step feature included in each piece of information.

For example, the encoding neural network may be a recurrent neural network, for example, a bidirectional LSTM/GRU, or the encoding neural network may be a neural network structure implemented by using a multi-head attention mechanism, for example, a transformer. The transformer is a neural network structure, and a model that uses an attention mechanism to improve a model training speed has a good effect in natural language processing and image fields, and may also be used for encoding/decoding.

For example, for step 910, refer to the encoding manner shown in FIG. 7. It can be learned from the foregoing descriptions that, at the encoder in FIG. 7, the input of the GRU corresponding to $b_2$ may include two parts: the output of the GRU corresponding to $b_1$ and $b_2$; ...; and the input of the GRU corresponding to $b_t$ may include two parts: the output of the GRU corresponding to $b_{t-1}$ and $b_t$. $b_1$, $b_2$, ..., and $b_K$ are independent of each other.

In this embodiment of this application, the manner 1 and the manner 2 are used as an example. The K pieces of first information are represented as $\{x_1, x_2, ..., x_K\}$. Input of a GRU corresponding to $x_2$ may include two

parts: output of a GRU corresponding to $x_1$ and $x_1$; ...; and input of a GRU corresponding to $x_K$ may include two parts: output of a GRU corresponding to $x_{K-1}$ and $x_K$. $x_1$, $x_2$, ..., and $x_K$ are not independent of each other, that is, there is a dependency between $x_1$, $x_2$, ..., and $x_K$. This is because convolution kernels or sliding windows respectively corresponding to $x_j$ and $x_{j+1}$ include some same bits, and problems such as gradient explosion and gradient vanishing are not easily caused. $x_j$ is an F-dimensional vector, and a value of j ranges from 1 to K-1.

Therefore, a local dependency between the bits in the to-be-sent bit sequence may be obtained by obtaining the plurality of pieces of first information based on the to-be-sent bit sequence, and a global dependency between the bits in the to-be-sent bit sequence may be obtained by encoding the plurality of pieces of first information into the second information. Therefore, an encoding burden can be reduced, and problems such as gradient explosion and gradient vanishing are not easily caused. In addition, encoding performance of a medium-length sequence can be improved, and a training difficulty of an encoding model can be reduced.

Step 920: The sending device sends the second information.

Step 930: The receiving device decodes received third information into a plurality of pieces of fourth information, where each piece of fourth information includes a multi-dimensional time step feature.

It may be understood that the third information includes the second information and a noise signal that are sent by the sending device. The fourth information includes the first information and the noise signal. Compared with the multi-dimensional time step feature included in each piece of first information, the multi-dimensional time step feature included in each piece of fourth information is a multi-dimensional time step feature with noise.

For example, when the receiving device decodes the third information into the plurality of pieces of fourth information, the receiving device inputs the third information into an input layer of a decoding neural network element, to obtain a plurality of pieces of fourth information output by an output layer of the decoding neural network element, and the decoding neural network element is configured to decode the third information.

The decoding neural network may also be referred to as a decoding neural network, and may be a recurrent neural network. The decoding neural network is the recurrent neural network, for example, a bidirectional LSTM/GRU, or the decoding neural network may be a neural network structure implemented by using a multi-head attention mechanism, for example, a transformer.

Step 940: The receiving device obtains a decoding result based on the plurality of pieces of fourth information. The multi-dimensional time step feature included in each piece of fourth information corresponds to a plurality of bits in the decoding result, a plurality of bits corresponding to a multi-dimensional time step feature included in an $i^{th}$ piece of fourth information and a plurality of bits corresponding to a multi-dimensional time step feature included in an $(i+1)^{th}$ piece of fourth information are partially the same, and i is a positive integer.

It may be understood that the decoding result herein may be the to-be-sent bit sequence, namely, the original bit sequence.

It should be noted that a specific process in which the receiving device obtains the decoding result based on the plurality of pieces of fourth information is not limited in this application.

For example, the receiving device may obtain the decoding result based on the plurality of pieces of fourth information, a preset stride, and a preset group size. The preset stride herein is the same as the preset stride used by the sending device during encoding, and the preset group size is the same as the preset group size used by the sending device during encoding.

In a possible implementation, the receiving device may obtain the decoding result via the convolutional neural network based on the plurality of pieces of fourth information, the preset stride, and the preset group size.

For example, when a quantity of bits included in a bit sequence corresponding to the third information is the same as a quantity of pieces of fourth information, a specific process in which the receiving device obtains the decoding result via the convolutional neural network is as follows.

This corresponds to the foregoing manner 1. The receiving device may determine a first matrix based on a matrix corresponding to K pieces of fourth information, a first preset matrix, and a second preset matrix, where first P columns of elements in the first matrix are determined based on the first preset matrix, elements in a $(P+1)^{th}$ column to a $(P+K)^{th}$ column in the first matrix are determined based on the matrix corresponding to the K pieces of fourth information, elements in a $(P+K+1)^{th}$ column to a $(2P+K)^{th}$ column in the first matrix are determined based on the second preset matrix, and P is a positive integer. Further, the receiving device may obtain the decoding result from the first matrix via the convolutional neural network based on a stride of 1 and a convolution kernel size of 2P+1. The quantity of pieces of fourth information is K, the decoding result includes K bits, and K is a positive integer.

It may be understood that, when the quantity of pieces of fourth information is K, and a dimension of the multi-dimensional time step feature is F, the matrix corresponding to the K pieces of fourth information is a matrix including F rows and K columns, and each element in the matrix is one time step feature. When the dimension of the multi-dimensional time step feature is F, the first preset matrix is a matrix including F rows and P columns, and the second preset matrix is a matrix including F rows and P columns. The first matrix is a matrix constituted in a sequence of the first preset matrix, the matrix corresponding to the K pieces of fourth information, and the second preset matrix.

The first preset matrix and the second preset matrix are matrices known to the receiving device. The first preset matrix and the second preset matrix may be the same or different. For example, the first preset matrix may be an all-0 matrix or an all-1 matrix; and the second preset matrix may be an all-0 matrix or an all-1 matrix. For example, a quantity of column vectors included in the first preset matrix may be the same as a quantity of bits included in the foregoing first preset sequence. A quantity of column vectors included in the second preset matrix may be the same as a quantity of bits included in the foregoing second preset sequence.

In addition, when the quantity of bits included in the bit sequence corresponding to the third information is different from the quantity of pieces of fourth information, for a process in which the receiving device restores the bit sequence corresponding to the third information by performing a convolution operation, refer to the foregoing content.

In a possible implementation, the receiving device may obtain the decoding result via a fully connected neural network based on the plurality of pieces of fourth information, the preset stride, and the preset group size.

For example, when a quantity of bits included in the bit sequence corresponding to the third information is the same as the quantity of pieces of fourth information, a specific process in which the receiving device obtains the decoding result via the fully connected neural network is as follows.

This corresponds to the foregoing manner 2. The receiving device determines a first matrix based on a matrix corresponding to K pieces of fourth information, a first preset matrix, and a second preset matrix, where first P columns of elements in the first matrix are determined based on the first preset matrix, elements in a $(P+1)^{th}$ column to a $(P+K)^{th}$ column in the first matrix are determined based on the matrix corresponding to the K pieces of fourth information, elements in a $(P+K+1)^{th}$ column to a $(2P+K)^{th}$ column in the first matrix are determined based on the second preset matrix, and P is a positive integer. Further, the receiving device inputs the first matrix into an input layer of the fully connected neural network based on a stride of 1 and a sliding window size of 2P+1, to obtain K bits output by an output layer of the fully connected neural network, where the fully connected neural network is configured to output a corresponding decoding result based on the first matrix.

The foregoing method for obtaining the first matrix is not described again.

For example, the fully connected neural network may be replaced with another neural network. This is not limited in this application.

In addition, when the quantity of bits included in the bit sequence corresponding to the third information is different from the quantity of pieces of fourth information, for a process in which the receiving device obtains the decoding result via the fully connected neural network, refer to the foregoing content. It may be understood that the fully connected neural network herein is different from the fully connected neural network in the manner 2.

According to the foregoing method, an encoding burden can be reduced, and problems such as gradient explosion and gradient vanishing are not easily caused. In addition, encoding performance of a medium-length sequence can be improved, and a training difficulty of an encoding model can be reduced, thereby increasing a decoding success rate of the receiving device.

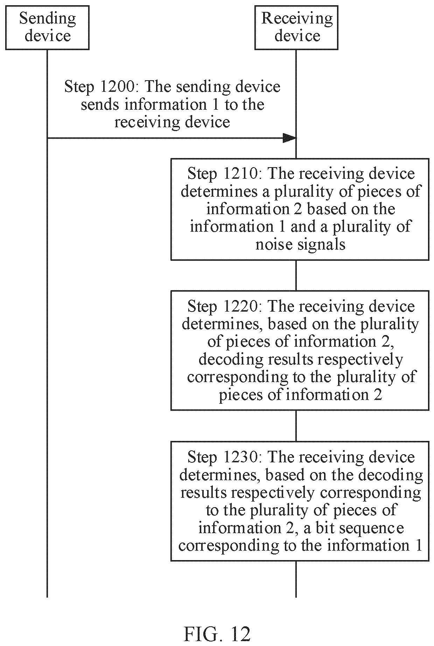

Currently, although bit error rate performance of neural network encoding/decoding is good, block error rate performance is poor. To resolve this problem, this application provides a decoding method. As shown in FIG. 12, the method includes the following steps.

The following method is described by using an example in which the method is performed by a sending device and a receiving device. In addition, the sending device and the receiving device may be replaced with an encoder and a decoder, or an encoding device and a decoding device, or an apparatus (for example, an encoding chip) with an encoding function and an apparatus (for example, a decoding chip) with an encoding function. In the following method, the sending device may be a terminal device, and the receiving device may be a network device. Alternatively, the sending device may be a network device, and the receiving device may be a terminal device.

Step 1200: The sending device sends information 1 to the receiving device.

Step 1210: The receiving device determines a plurality of pieces of information 2 based on the information 1 and a plurality of noise signals, where the plurality of noise signals are determined based on a signal-to-noise ratio (signal-to-noise ratio, SNR).

For example, when receiving the information 1, the receiving device obtains the signal-to-noise ratio, and determines the plurality of noise signals based on the signal-to-noise ratio.

Alternatively, the receiving device obtains a previously obtained signal-to-noise ratio, for example, a preset signal-to-noise ratio, or a signal-to-noise ratio obtained through latest measurement, and determines the plurality of noise signals based on the signal-to-noise ratio.

For example, a noise generator in the receiving device may generate the plurality of noise signals based on the signal-to-noise ratio. A specific manner in which the receiving device obtains the plurality of noise signals is not limited in this application.

In a possible implementation, the receiving device may obtain corresponding information 2 based on a linear combination of the information 1 and each of the plurality of noise signals.

For example, when determining the plurality of pieces of information 2 based on the information 1 and the plurality of noise signals, the receiving device may add the information 1 and each of the plurality of noise signals to obtain the corresponding information 2. For example, if a quantity of noise signals is M, the receiving device adds the information 1 and a 1st noise signal to obtain a 1st piece of information 2; the receiving device adds the information 1 and a 2nd noise signal to obtain a 2nd piece of information 2; ...; and the receiving device adds the information 1 and an Mth noise signal to obtain an Mth piece of information 2.

The information 2 herein may also be referred to as noisy information. It may be understood that, in addition to a direct addition manner, the information 2 may also be obtained in another manner. For example, the information 1 is added to each noise signal of a preset proportion to obtain corresponding information 2. This is not limited in this application.

Step 1220: The receiving device determines, based on the plurality of pieces of information 2, decoding results respectively corresponding to the plurality of pieces of information 2.

In a possible design, when determining, based on the plurality of pieces of information 2, the decoding results respectively corresponding to the plurality of pieces of information 2, the receiving device may decode the plurality of pieces of information 2 via a decoding neural network, to obtain the decoding results respectively corresponding to the plurality of pieces of information 2. For example, the receiving device may input each of the plurality of pieces of information 2 into an input layer of the decoding neural network, to obtain a corresponding decoding result output by an output layer of the decoding neural network.

It should be noted that a specific type of the decoding neural network is not limited in this embodiment. For example, the decoding neural network may be a CNN or an RNN.

Step 1230: The receiving device determines, based on the decoding results respectively corresponding to the plurality of pieces of information 2, a bit sequence corresponding to the information 1.

For example, the receiving device may restore, based on the decoding results respectively corresponding to the plurality of pieces of information 2, the bit sequence corresponding to the information 1 in a manner such as CRC selection or bit combination.

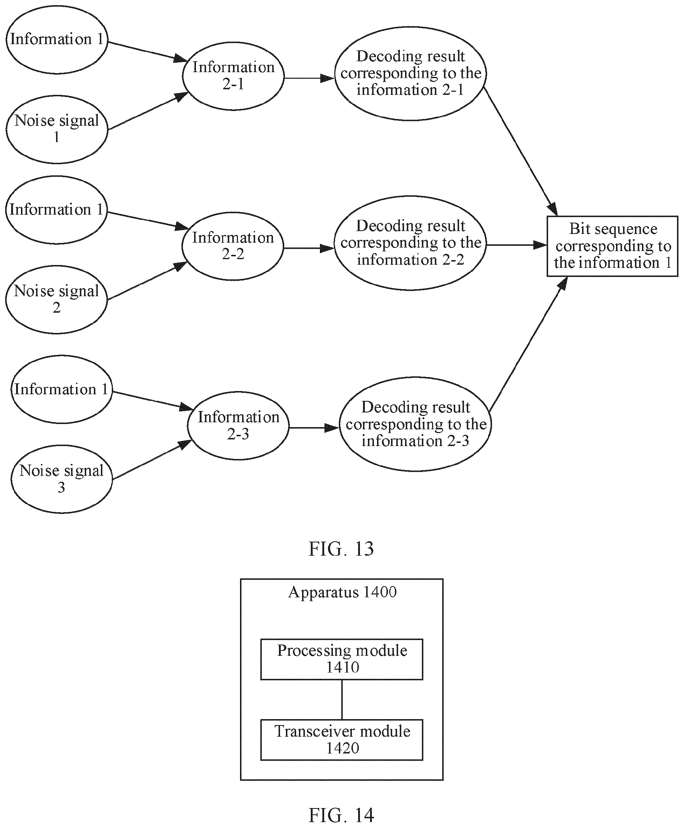

For example, as shown in FIG. 13, the receiving device determines three pieces of information 2 based on the information 1 and three noise signals. For example, the receiving device adds the information 1 and a noise signal 1 to obtain information 2-1, adds the information 1 and a noise signal 2 to obtain information 2-2, and adds the information 1 and a noise signal 3 to obtain information 2-3. Further, the receiving device determines, based on the three pieces of information 2, decoding results respectively corresponding to the three pieces of information 2: a decoding result corresponding to the information 2-1, a decoding result corresponding to the information 2-2, and a decoding result corresponding to the information 2-3. The receiving device determines, from the decoding results respectively corresponding to the three pieces of information 2, the bit sequence corresponding to the information 1.

According to the foregoing design, because the decoding neural network is obtained through noisy training, and has good performance in a wide signal-to-noise ratio range, inputting different information 2 can enable the decoding neural network to output different decoding results, so that block error rate performance can be improved by selecting a correct codeword.

It may be understood that the foregoing decoding method may be used independently, or may be combined with the embodiment shown in FIG. 9. This is not limited in this application.

FIG. 14 is a possible example block diagram of a communication apparatus according to an embodiment of this application. The apparatus 1400 includes a transceiver module 1420 and a processing module 1410. The transceiver module 1420 may include a receiving unit and a sending unit. The processing module 1410 is configured to control and manage an action of the apparatus 1400. The transceiver module 1420 is configured to support the apparatus 1400 in communicating with another network entity. Optionally, the apparatus 1400 may further include a storage unit. The storage unit is configured to store program code and data of the apparatus 1400.

Optionally, each module in the apparatus 1400 may be implemented by software.

Optionally, the processing module 1410 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in embodiments of this application. The processor may alternatively be a combination of processors implementing a computing function, for example, a combination of one or more microprocessors, or a combination of the DSP and a microprocessor. The transceiver module 1420 may be a communication interface, a transceiver, a transceiver circuit, or the like. The communication interface is a general term. During specific implementation, the communication interface may include a plurality of interfaces. The storage unit may be a memory.

When the apparatus 1400 is a sending device or a chip in the sending device, the processing module 1410 in the apparatus 1400 may support the apparatus 1400 in performing the actions of the receiving device in the foregoing method examples, for example, may support the apparatus 1400 in performing step 900, step 910, or step 930 in FIG. 9.

The transceiver module 1420 may support the apparatus 1400 in communicating with the receiving device. For example, the transceiver module 1420 may support the apparatus 1400 in performing step 920 in FIG. 9.

The processing module 1410 is configured to: obtain a plurality of pieces of first information based on a to-be-sent bit sequence, where each piece of first information includes a multi-dimensional time step feature, the multi-dimensional time step feature is determined based on a plurality of bits in the bit sequence, a plurality of bits corresponding to a multi-dimensional time step feature included in an $i^{th}$ piece of first information and a plurality of bits corresponding to a multi-dimensional time step feature included in an $(i+1)^{th}$ piece of first information are partially the same, and i is a positive integer; and encode the plurality of pieces of first information into second information. The transceiver module 1420 is configured to send the second information.

In a possible design, the processing module 1410 is configured to: when obtaining the plurality of pieces of first information based on the to-be-sent bit sequence, perform a time step feature extraction operation on the to-be-sent bit sequence based on a preset stride and a preset group size, to obtain the plurality of pieces of first information, where the time step extraction operation is implemented through a neural network operation.

In a possible design, the bit sequence includes K bits, and K is a positive integer.

The processing module 1410 is configured to: when obtaining the plurality of pieces of first information based on the to-be-sent bit sequence, add S bits to the K bits to obtain K+S bits, where S is a positive integer; and perform a time step feature extraction operation on the obtained K+S bits based on a preset stride and a preset group size, to obtain the plurality of pieces of first information, where the time step extraction operation is implemented through a neural network operation.

In a possible design, the neural network is a convolutional neural network or a fully connected neural network.

In a possible design, a quantity of pieces of first information is K.

The processing module 1410 is configured to: when adding the S bits to the K bits to obtain the K+S bits, add P bits to each of a head and a tail of the K bits to obtain K+2P bits, where S=2P, P is a positive integer, the P bits added to the head are a first preset sequence, and the P bits added to the tail are a second preset sequence.

The processing module 1410 is configured to: when performing the time step feature extraction operation on the obtained K+S bits based on the preset stride and the preset group size, to obtain the plurality of pieces of first information, process the K+2P bits via the convolutional neural network based on a stride of 1 and a convolution kernel size of 2P+1, to obtain the K pieces of first information.

In a possible design, a quantity of pieces of first information is K.

The processing module 1410 is configured to: when adding the S bits to the K bits to obtain the K+S bits, add P bits to each of a head and a tail of the K bits to obtain K+2P bits, where S=2P, P is a positive integer, the P bits added to the head are a first preset sequence, and the P bits added to the tail are a second preset sequence.

The processing module 1410 is configured to: when performing the time step feature extraction operation on the obtained K+S bits based on the preset stride and the preset group size, to obtain the plurality of pieces of first information, determine K sliding windows from the K+2P bits based on a stride of 1 and a sliding window size of 2P+1; and obtain the K pieces of first information via the fully connected neural network based on the K sliding windows.

In a possible design, the fully connected neural network is configured to output a corresponding multi-dimensional time step feature based on 2P+1 bits included in each sliding window.

In a possible design, the first preset bit sequence is an all-0 sequence or an all-1 sequence; and the second preset bit sequence is an all-0 sequence or an all-1 sequence.

It should be understood that the apparatus 1400 according to this embodiment of this application may correspond to the sending device in the foregoing method embodiment, and operations and/or functions of the modules in the apparatus 1400 are separately used to implement corresponding steps of the method of the sending device in the foregoing method embodiment. Therefore, beneficial effects in the foregoing method embodiment can also be implemented. For brevity, details are not described herein again.

When the apparatus 1400 is a receiving device or a chip in the receiving device, the processing module 1410 in the apparatus 1400 may support the apparatus 1400 in performing the actions of the receiving device in the foregoing method examples, for example, may support the apparatus 1400 in performing step 930 or step 940 in FIG. 9.

The transceiver module 1420 may support the apparatus 1400 in communicating with the sending device. For example, the transceiver module 1420 may support the apparatus 1400 in performing step 920 in FIG. 9.

For example, the transceiver module 1420 is configured to receive third information.

The processing module 1410 is configured to: decode the third information into a plurality of pieces of fourth information, where each piece of fourth information includes a multi-dimensional time step feature; and obtain a decoding result based on the plurality of pieces of fourth information, where the multi-dimensional time step feature included in each piece of fourth information corresponds to a plurality of bits in the decoding result, a plurality of bits corresponding to a multi-dimensional time step feature included in an $i^{th}$ piece of fourth information and a plurality of bits corresponding to a multi-dimensional time step feature included in an $(i+1)^{th}$ piece of fourth information are partially the same, and i is a positive integer.

In a possible design, the processing module 1410 is configured to: when obtaining the decoding result based on the plurality of pieces of fourth information, obtain the decoding result based on the plurality of pieces of fourth information, a preset stride, and a preset group size.

In a possible design, the processing module 1410 is configured to: when obtaining the decoding result based on the plurality of pieces of fourth information, the preset stride, and the preset group size, obtain the decoding result via a convolutional neural network based on the plurality of pieces of fourth information, the preset stride, and the preset group size.

In a possible design, the processing module 1410 is configured to: when obtaining the decoding result based on the plurality of pieces of fourth information, the preset stride, and the preset group size, obtain the decoding result via a fully connected neural network based on the plurality of pieces of fourth information, the preset stride, and the preset group size.

In a possible design, a quantity of pieces of fourth information is K, the decoding result includes K bits, and K is a positive integer.

It should be understood that the apparatus 1400 according to this embodiment of this application may correspond to the receiving device in the foregoing method embodiment, and operations and/or functions of the modules in the apparatus 1400 are separately used to implement corresponding steps of the method of the receiving device in the foregoing method embodiment. Therefore, beneficial effects in the foregoing method embodiment can also be implemented. For brevity, details are not described herein again.

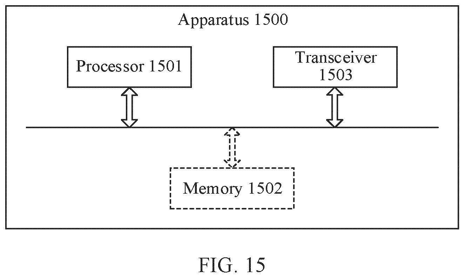

FIG. 15 is a diagram of a structure of a communication apparatus 1500 according to an embodiment of this application. As shown in FIG. 15, the apparatus 1500 includes a processor 1501.

When the apparatus 1500 is a sending device or a chip in the sending device, in a possible implementation, the processor 1501 is configured to invoke an interface to perform the following actions:
obtaining a plurality of pieces of first information based on a to-be-sent bit sequence, where each piece of first information includes a multi-dimensional time step feature, the multi-dimensional time step feature is determined based on a plurality of bits in the bit sequence, a plurality of bits corresponding to a multi-dimensional time step feature included in an ith piece of first information and a plurality of bits corresponding to a multi-dimensional time step feature included in an (i+1)th piece of first information are partially the same, and i is a positive integer; and encoding the plurality of pieces of first information into second information.

It should be understood that the apparatus 1500 may be further configured to perform other steps and/or operations on the sending device side in the foregoing embodiment. For brevity, details are not described herein.

When the apparatus 1500 is a receiving device or a chip in the receiving device, in a possible implementation, the processor 1501 is configured to invoke an interface to perform the following actions:
receiving second information; decoding the second information into a plurality of pieces of first information, where each piece of first information includes a multi-dimensional time step feature; and obtaining a bit sequence based on the plurality of pieces of first information, where the multi-dimensional time step feature included in each piece of first information corresponds to a plurality of bits in the bit sequence, a plurality of bits corresponding to a multi-dimensional time step feature included in an ith piece of first information and a plurality of bits corresponding to a multi-dimensional time step feature included in an (i+1)th piece of first information are partially the same, and i is a positive integer.

It should be understood that the apparatus 1500 may be further configured to perform other steps and/or operations on the receiving device side in the foregoing embodiment. For brevity, details are not described herein.

It should be understood that the processor 1501 may invoke the interface to perform the foregoing receiving and sending actions. The invoked interface may be a logical interface or a physical interface. This is not limited. Optionally, the physical interface may be implemented by using a transceiver. Optionally, the apparatus 1500 further includes a transceiver 1503.

Optionally, the apparatus 1500 further includes a memory 1502, and the memory 1502 may store program code in the foregoing method embodiment, so that the processor 1501 invokes the program code.

Specifically, if the apparatus 1500 includes the processor 1501, the memory 1502, and the transceiver 1503, the processor 1501, the memory 1502, and the transceiver 1503 communicate with each other through an inner connection path, to transmit a control signal and/or a data signal. In a possible design, the processor 1501, the memory 1502, and the transceiver 1503 may be implemented by using a chip. The processor 1501, the memory 1502, and the transceiver 1503 may be implemented in a same chip, or may be separately implemented in different chips, or functions of any two of the processor 1501, the memory 1502, and the transceiver 1503 are implemented in one chip. The memory 1502 may store the program code, and the processor 1501 invokes the program code stored in the memory 1502, to implement a corresponding function of the apparatus 1500.

The method disclosed in the foregoing embodiment of this application may be applied to the processor, or may be implemented by the processor. The processor may be an integrated circuit chip and has a signal processing capability. In an implementation process, steps in the foregoing method embodiments may be implemented by using a hardware integrated logical circuit in the processor or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly; or may be a system on chip (system on chip, SoC); or may be a central processing unit (central processing unit, CPU); or may be a network processor (network processor, NP); or may be a digital signal processing circuit (digital signal processor, DSP); or may be a micro controller unit (micro controller unit, MCU); or may be a programmable controller (programmable logic device, PLD) or another integrated chip. The processor may implement or perform the method, the steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory of the system and method described in this specification includes but is not limited to these memories and any memory of another proper type.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Various numerical numbers or sequence numbers in the foregoing processes are merely distinguished for ease of description, and should not constitute any limitation on the implementation processes of embodiments of this application.

It should be further understood that the term "and/or" in this specification describes only an association relationship for describing associated objects and represents that three relationships may exist. For example, A and/or B may indicate the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory ROM, a random access memory RAM, a magnetic disk, or an optical disc.

## Claims

1. A channel encoding/decoding method, wherein the method comprises:

   obtaining a plurality of pieces of first information based on a to-be-sent bit sequence, wherein each piece of first information comprises a multi-dimensional time step feature, the multi-dimensional time step feature is determined based on a plurality of bits in the bit sequence, a plurality of bits corresponding to a multi-dimensional time step feature comprised in an $i^{th}$ piece of first information and a plurality of bits corresponding to a multi-dimensional time step feature comprised in an $(i+1)^{th}$ piece of first information are partially the same, and i is a positive integer;
   encoding the plurality of pieces of first information into second information; and
   sending the second information.

2. The method according to claim 1, wherein the obtaining a plurality of pieces of first information based on a to-be-sent bit sequence comprises:
   performing a time step feature extraction operation on the to-be-sent bit sequence based on a preset stride and a preset group size, to obtain the plurality of pieces of first information, wherein the time step extraction operation is implemented through a neural network operation.

3. The method according to claim 1, wherein the bit sequence comprises K bits, and K is a positive integer; and
   the obtaining a plurality of pieces of first information based on a to-be-sent bit sequence comprises:

   adding S bits to the K bits to obtain K+S bits, wherein S is a positive integer; and
   performing a time step feature extraction operation on the obtained K+S bits based on a preset stride and a preset group size, to obtain the plurality of pieces of first information, wherein the time step extraction operation is implemented through a neural network operation.

4. The method according to claim 2 or 3, wherein the neural network is a convolutional neural network or a fully connected neural network.

5. The method according to claim 3 or 4, wherein a quantity of pieces of first information is K;
   the adding S bits to the K bits to obtain K+S bits comprises:

   adding P bits to each of a head and a tail of the K bits to obtain K+2P bits, wherein S=2P, P is a positive integer, the P bits added to the head are a first preset sequence, and the P bits added to the tail are a second preset sequence; and

the performing a time step feature extraction operation on the obtained K+S bits based on a preset stride and a preset group size, to obtain the plurality of pieces of first information comprises:
processing the K+2P bits via the convolutional neural network based on a stride of 1 and a convolution kernel size of 2P+1, to obtain the K pieces of first information.

6. The method according to claim 3 or 4, wherein a quantity of pieces of first information is K;
the adding S bits to the K bits to obtain K+S bits comprises:

adding P bits to each of a head and a tail of the K bits to obtain K+2P bits, wherein S=2P, P is a positive integer, the P bits added to the head are a first preset sequence, and the P bits added to the tail are a second preset sequence; and
the performing a time step feature extraction operation on the obtained K+S bits based on a preset stride and a preset group size, to obtain the plurality of pieces of first information comprises:

determining K sliding windows from the K+2P bits based on a stride of 1 and a sliding window size of 2P+1; and
obtaining the K pieces of first information via the fully connected neural network based on the K sliding windows.

7. The method according to claim 6, wherein the fully connected neural network is configured to output a corresponding multi-dimensional time step feature based on 2P+1 bits comprised in each sliding window.

8. The method according to any one of claims 5 to 7, wherein the first preset bit sequence is an all-0 sequence or an all-1 sequence; and the second preset bit sequence is an all-0 sequence or an all-1 sequence.

9. A channel encoding/decoding method, wherein the method comprises:

receiving third information;
decoding the third information into a plurality of pieces of fourth information, wherein each piece of fourth information comprises a multi-dimensional time step feature; and
obtaining a decoding result based on the plurality of pieces of fourth information, wherein the multi-dimensional time step feature comprised in each piece of fourth information corresponds to a plurality of bits in the decoding result, a plurality of bits corresponding to a multi-dimensional time step feature comprised in an $i^{th}$ piece of fourth information and a plurality of bits corresponding to a multi-dimensional time step feature comprised in an $(i+1)^{th}$ piece of fourth information are partially the same, and i is a positive integer.

10. The method according to claim 9, wherein the obtaining a decoding result based on the plurality of pieces of fourth information comprises:
obtaining the decoding result based on the plurality of pieces of fourth information, a preset stride, and a preset group size.

11. The method according to claim 10, wherein the obtaining the decoding result based on the plurality of pieces of fourth information, a preset stride, and a preset group size comprises:
obtaining the decoding result via a convolutional neural network based on the plurality of pieces of fourth information, the preset stride, and the preset group size.

12. The method according to claim 10, wherein the obtaining the decoding result based on the plurality of pieces of fourth information, a preset stride, and a preset group size comprises:
obtaining the decoding result via a fully connected neural network based on the plurality of pieces of fourth information, the preset stride, and the preset group size.

13. The method according to any one of claims 9 to 12, wherein a quantity of pieces of fourth information is K, the decoding result comprises K bits, and K is a positive integer.

14. A communication apparatus, wherein the apparatus comprises:

a processing unit, configured to: obtain a plurality of pieces of first information based on a to-be-sent bit sequence, wherein each piece of first information comprises a multi-dimensional time step feature, the multi-dimensional time step feature is determined based on a plurality of bits in the bit sequence, a plurality of bits corresponding to a multi-dimensional time step feature comprised in an $i^{th}$ piece of first information and a plurality of bits corresponding to a multi-dimensional time step feature comprised in an $(i+1)^{th}$ piece of first information are partially the same, and i is a positive integer; and encode the plurality of pieces of first information into second information; and
a transceiver unit, configured to send the second information.

15. The apparatus according to claim 14, wherein the processing unit is configured to: when obtaining the plurality of pieces of first information based on the to-be-sent bit sequence, perform a time step feature extraction operation on the to-be-sent bit sequence based on a preset stride and a preset group size, to obtain the plurality of pieces of first information, wherein the time step extraction operation is implemented through a neural network operation.

16. The apparatus according to claim 14, wherein the bit sequence comprises K bits, and K is a positive integer; and
the processing unit is configured to: when obtaining the plurality of pieces of first information based on the to-be-sent bit sequence, add S bits to the K bits to obtain K+S bits, wherein S is a positive integer; and perform a time step feature extraction operation on the obtained K+S bits based on a preset stride and a preset group size, to obtain the plurality of pieces of first information, wherein the time step extraction operation is implemented through a neural network operation.

17. The apparatus according to claim 15 or 16, wherein the neural network is a convolutional neural network or a fully connected neural network.

18. The apparatus according to claim 16 or 17, wherein a quantity of pieces of first information is K;

the processing unit is configured to: when adding the S bits to the K bits to obtain the K+S bits, add P bits to each of a head and a tail of the K bits to obtain K+2P bits, wherein S=2P, P is a positive integer, the P bits added to the head are a first preset sequence, and the P bits added to the tail are a second preset sequence; and
the processing unit is configured to: when performing the time step feature extraction operation on the obtained K+S bits based on the preset stride and the preset group size, to obtain the plurality of pieces of first information, process the K+2P bits via the convolutional neural network based on a stride of 1 and a convolution kernel size of 2P+1, to obtain the K pieces of first information.

19. The apparatus according to claim 16 or 17, wherein a quantity of pieces of first information is K;

the processing unit is configured to: when adding the S bits to the K bits to obtain the K+S bits, add P bits to each of a head and a tail of the K bits to obtain K+2P bits, wherein S=2P, P is a positive integer, the P bits added to the head are a first preset sequence, and the P bits added to the tail are a second preset sequence; and
the processing unit is configured to: when performing the time step feature extraction operation on the obtained K+S bits based on the preset stride and the preset group size, to obtain the plurality of pieces of first information, determine K sliding windows from the K+2P bits based on a stride of 1 and a sliding window size of 2P+1; and obtain the K pieces of first information via the fully connected neural network based on the K sliding windows.

20. The apparatus according to claim 19, wherein the fully connected neural network is configured to output a corresponding multi-dimensional time step feature based on 2P+1 bits comprised in each sliding window.

21. The apparatus according to any one of claims 18 to 20, wherein the first preset bit sequence is an all-0 sequence or an all-1 sequence; and the second preset bit sequence is an all-0 sequence or an all-1 sequence.

22. A communication apparatus, wherein the apparatus comprises:

a transceiver unit, configured to receive third information; and
a processing unit, configured to decode the third information into a plurality of pieces of fourth information, wherein each piece of fourth information comprises a multi-dimensional time step feature; and obtain a decoding result based on the plurality of pieces of fourth information, wherein the multi-dimensional time step feature comprised in each piece of fourth information corresponds to a plurality of bits in the decoding result, a plurality of bits corresponding to a multi-dimensional time step feature comprised in an $i^{th}$ piece of fourth information and a plurality of bits corresponding to a multi-dimensional time step feature comprised in an $(i+1)^{th}$ piece of fourth information are partially the same, and i is a positive integer.

23. The apparatus according to claim 22, wherein the processing unit is configured to: when obtaining the decoding result based on the plurality of pieces of fourth information, obtain the decoding result based on the plurality of pieces of fourth information, a preset stride, and a preset group size.

24. The apparatus according to claim 23, wherein the processing unit is configured to: when obtaining the decoding result based on the plurality of pieces of fourth information, the preset stride, and the preset group size, obtain the decoding result via a convolutional neural network based on the plurality of pieces of fourth information, the preset stride, and the preset group size.

25. The apparatus according to claim 23, wherein the processing unit is configured to: when obtaining the decoding result based on the plurality of pieces of fourth information, the preset stride, and the preset group size, obtain the decoding result via a fully connected neural network based on the plurality of pieces of fourth information, the preset stride, and the preset group size.

26. The apparatus according to any one of claims 22 to 25, wherein a quantity of pieces of fourth information is K, the decoding result comprises K bits, and K is a positive integer.

27. A communication apparatus, wherein the communication apparatus comprises a processor, and the processor executes computer-executable instructions stored in a memory, to enable the communication apparatus to perform the method according to any one of claims 1 to 13.

28. A computer-readable storage medium, wherein the storage medium stores a computer program or instructions, and when the computer program or the instructions are executed by a communication apparatus, the method according to any one of claims 1 to 13 is implemented.

29. A computer program product, wherein the computer program product comprises a computer program or instructions, and when the computer program or the instructions are executed by a communication apparatus, the method according to any one of claims 1 to 13 is implemented.

FIG. 1

FIG. 2

FIG. 3

FIG. 4

$$\underset{q,g}{\mathrm{argmin}}\, \mathcal{L}(r, g(q(r)))$$

FIG. 5

FIG. 6

$x_1$ $\qquad$ $x_2$ $\qquad$ $\ldots$ $\qquad$ $x_t$

| FCNN | | FCNN | | | | FCNN |

| GRU 1 | → | GRU 1 | → | $\ldots$ | → | GRU 1 |

$b_1$ $\qquad$ $b_2$ $\qquad$ $\ldots$ $\qquad$ $b_t$

Encoder

FIG. 7

| CNN 1 | → $x_1$

$b$ → | CNN 2 | → $x_2$

| Interleave | → | CNN 3 | → $x_3$

Encoder

FIG. 8

Sending
device

Receiving
device

Step 900: The sending device
obtains a plurality of pieces of
first information based on a to-
be-sent bit sequence

Step 910: The sending device
encodes the plurality of pieces
of first information into second
information

Step 920: The sending device
sends the second information

Step 930: The receiving device
decodes received third
information into a plurality of
pieces of fourth information

Step 940: The receiving device
obtains a decoding result based
on the plurality of pieces of
fourth information

FIG. 9

To-be-sent bit sequence

P bits

P bits

Bit sequence obtained through addition

Perform a convolution
operation to obtain a plurality
of pieces of first information

$x_1$     $x_2$     ...     $x_i$     ...     $x_{k-1}$     $x_k$

Encoding neural network

Encoded bit sequence (namely, second information)

FIG. 10

To-be-sent bit sequence

P bits

P bits

Bit sequence obtained through addition

Sliding window 1

Sliding window 2

...

Sliding window K

First neural network

...

$x_1$

$x_2$

...

$x_K$

Encoding neural network

Encoded bit sequence (namely, second information)

FIG. 11

```
┌──────────┐                              ┌──────────┐
│ Sending  │                              │Receiving │
│  device  │                              │  device  │
└──────────┘                              └──────────┘
     │         Step 1200: The sending device    │
     │           sends information 1 to the      │
     │                receiving device           │
     │─────────────────────────────────────────▶│
     │                                           │
     │              ┌────────────────────────────────────┐
     │              │  Step 1210: The receiving device   │
     │              │ determines a plurality of pieces of│
     │              │     information 2 based on the      │
     │              │  information 1 and a plurality of   │
     │              │           noise signals            │
     │              └────────────────────────────────────┘
     │                                           │
     │              ┌────────────────────────────────────┐
     │              │  Step 1220: The receiving device   │
     │              │ determines, based on the plurality │
     │              │     of pieces of information 2,     │
     │              │   decoding results respectively    │
     │              │ corresponding to the plurality of  │
     │              │     pieces of information 2         │
     │              └────────────────────────────────────┘
     │                                           │
     │              ┌────────────────────────────────────┐
     │              │  Step 1230: The receiving device   │
     │              │ determines, based on the decoding  │
     │              │ results respectively corresponding │
     │              │    to the plurality of pieces of   │
     │              │   information 2, a bit sequence     │
     │              │ corresponding to the information 1  │
     │              └────────────────────────────────────┘
     │                                           │
```

FIG. 12

Information 1

Noise signal 1

Information 2-1

Decoding result corresponding to the information 2-1

Information 1

Noise signal 2

Information 2-2

Decoding result corresponding to the information 2-2

Bit sequence corresponding to the information 1

Information 1

Noise signal 3

Information 2-3

Decoding result corresponding to the information 2-3

FIG. 13

Apparatus 1400

Processing module 1410

Transceiver module 1420

FIG. 14

Apparatus 1500

Processor 1501

Transceiver 1503

Memory 1502

FIG. 15

## INTERNATIONAL SEARCH REPORT

| International application No. |
| --- |
| **PCT/CN2023/089480** |

| A. | CLASSIFICATION OF SUBJECT MATTER |
| --- | --- |

H04L1/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L H04W G06N

Documentation searched other than minimum documentation to the extent that such documents are included in the fields searched

Electronic data base consulted during the international search (name of data base and, where practicable, search terms used)

CNTXT, ENTXT, WPABSC, CNKI, 3GPP: 比特, 编码, 多维, 多元, 时间步, 相同, 重复, 信道, 译码, bit, multivariate, multi-variate, multidimensional, multi-dimensional, timestep, identical, same, repeat, code, encode, decode

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111587441 A (DEEPMIND TECHNOLOGIES LTD.) 25 August 2020 (2020-08-25) entire document | 1-29 |
| A | CN 112561165 A (NANJING UNIVERSITY OF AERONAUTICS AND ASTRONAUTICS) 26 March 2021 (2021-03-26) entire document | 1-29 |
| A | CN 109923559 A (SALESFORCE. COM TAIWAN LTD.) 21 June 2019 (2019-06-21) entire document | 1-29 |
| A | US 2012001778 A1 (STEINER AVI et al.) 05 January 2012 (2012-01-05) entire document | 1-29 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 July 2023** | **18 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/089480**

| Patent document cited in search report | | | Publication date (day/month/year) | Patent family member(s) | | | Publication date (day/month/year) |
|---|---|---|---|---|---|---|---|
| CN | 111587441 | A | 25 August 2020 | WO | 2019155054 | A1 | 15 August 2019 |
| | | | | US | 2020401874 | A1 | 24 December 2020 |
| | | | | EP | 3698292 | A1 | 26 August 2020 |
| CN | 112561165 | A | 26 March 2021 | | None | | |
| CN | 109923559 | A | 21 June 2019 | JP | 2020501231 | A | 16 January 2020 |
| | | | | JP | 6992064 | B2 | 13 January 2022 |
| | | | | EP | 3535700 | A1 | 11 September 2019 |
| | | | | US | 2021103816 | A1 | 08 April 2021 |
| | | | | CA | 3040188 | A1 | 11 May 2018 |
| | | | | CA | 3040188 | C | 03 August 2021 |
| | | | | AU | 2021201242 | A1 | 11 March 2021 |
| | | | | AU | 2021201242 | B2 | 11 August 2022 |
| | | | | US | 2018129937 | A1 | 10 May 2018 |
| | | | | EP | 3535699 | A1 | 11 September 2019 |
| | | | | WO | 2018085722 | A1 | 11 May 2018 |
| | | | | JP | 2021166073 | A | 14 October 2021 |
| | | | | JP | 7233475 | B2 | 06 March 2023 |
| | | | | US | 2018129931 | A1 | 10 May 2018 |
| | | | | US | 11080595 | B2 | 03 August 2021 |
| | | | | WO | 2018085724 | A1 | 11 May 2018 |
| | | | | AU | 2017355535 | A1 | 02 May 2019 |
| | | | | AU | 2017355535 | B2 | 26 November 2020 |
| | | | | CA | 3040153 | A1 | 11 May 2018 |
| | | | | AU | 2017355537 | A1 | 02 May 2019 |
| | | | | AU | 2017355537 | B2 | 18 February 2021 |
| | | | | JP | 2019537134 | A | 19 December 2019 |
| | | | | JP | 6903752 | B2 | 14 July 2021 |
| US | 2012001778 | A1 | 05 January 2012 | US | 8850297 | B1 | 30 September 2014 |
| | | | | US | 2012005554 | A1 | 05 January 2012 |
| | | | | US | 8621321 | B2 | 31 December 2013 |
| | | | | US | 2012005560 | A1 | 05 January 2012 |
| | | | | US | 8468431 | B2 | 18 June 2013 |
| | | | | US | 8510639 | B2 | 13 August 2013 |

Form PCT/ISA/210 (patent family annex) (July 2022)

**REFERENCES CITED IN THE DESCRIPTION**

**Patent documents cited in the description**

- CN 202210578899X